# EUROPEAN PATENT SPECIFICATION

(11) **EP 3 118 615 B1**
(45) Date of publication and mention of the grant of the patent: **27.03.2019**
(21) Application number: 16179408.6
(22) Date of filing: 14.07.2016
(51) Int. Cl.: G01N 27/327

(54) **TEST STRIP**
TESTSTREIFEN
BANDE D'ESSAI

(30) Priority: 17.07.2015 TW 104123195
(43) Date of publication of application: 18.01.2017
(73) Proprietor: Tyson Bioresearch, Inc., Miaoli Hsien 35053 (TW)
(72) Inventor: Lee, Cheng-Che, 302 Hsinchu County (TW); Tsai, Han-Ching, 242 New Taipei City (TW); Hsiao, Cheng-Yun, 730 Tainan City (TW); Liu, Jen-Hao, 106 Taipei City (TW)
(74) Representative: Becker Kurig Straus

(56) References cited:
- WO-A1-03/091717
- WO-A1-2010/070461
- US-A1- 2009 188 791
- US-A1- 2014 154 138
- JI WON SUK ET AL: "NOTE; Capillary flow control using hydrophobic patterns", JOURNAL OF MICROMECHANICS & MICROENGINEERING, INSTITUTE OF PHYSICS PUBLISHING, BRISTOL, GB, vol. 17, no. 4, 1 April 2007 (2007-04-01), pages N11-N15, XP020120069, ISSN: 0960-1317, DOI: 10.1088/0960-1317/17/4/N01

## Description

### Field of the Invention

The present invention relates to a test strip utilizing a channel formed cooperatively by a spacer layer, a channel portion of a cover layer, and a support layer to exhaust air staying in a reaction chamber according to claim 1.

### Background of the Invention

In general, test strips for detecting analyte solutions are usually divided into two types: a colorimetric chemical/biochemical test strip without electrodes and an electrical sensing strip composed of a chemical/biochemical/electrochemical identifying component by electrical signals transformation. The electrical sensing strip could transform chemical signals into electrical signals (i.e. electrochemical reactions) via the electrical signal transformer after the analyte solution is identified by the chemical/biochemical/electrochemical identifying component, and then could calculate the concentration of the analyte solution according to the electrical signals. A conventional electrical sensing strip usually utilizes an amperometric biosensor to get a reaction current of an analyte solution by controlling electric potentials of a working electrode and an auxiliary electrode. The electrical sensing strip has been applied to detection of blood glucose, cholesterol or other medicines. A conventional design is to sequentially stack an electrode layer, a spacer layer having a notch, a biocatalyst reagent layer, and a cover layer on a substrate to form a reaction chamber having an opening for an analyte solution. Accordingly, a micro channel could be formed so as to absorb the analyte solution into the reaction chamber via the capillary phenomenon for making the analyte solution react with the biocatalyst reagent layer. In this design, when the analyte solution enters the reaction chamber, air originally in the reaction chamber space cannot be exhausted if the opening side of the reaction chamber is filled with the analyte solution to form an airtight space. Accordingly, the analyte solution would stop flowing inwardly when there is a balance between an internal air pressure of the reaction chamber and an inward pressure formed by a cohesive force and an adhesion force of the analyte solution, so as to influence the detecting accuracy of the electrical sensing strip.

For solving the aforesaid problem, an upward (or downward) exhausting design that a hole (or a slit) is formed on the cover layer or the substrate is applied to the electrical sensing strip for ensuring that the air originally in the reaction chamber space could be exhausted smoothly. However, the aforesaid design needs the hole to be positioned precisely at the middle of a rear end of the reaction chamber for exhausting the air, such that this structure design causes a time-consuming and strenuous adhesive process for the cover layer. Furthermore, since the hole is just located on the upper side or lower side of the reaction chamber space which can be directly communicated with the reaction chamber in the aforesaid design, dust (or air outside the reaction chamber or moisture on a user's fingers) enters the reaction chamber via the hole easily which may influence the electrical sensing strip's detection results. Moreover, since there is no flow stopping design applied to the analyte solution in the reaction chamber, excessive amount of the analyte solution flowing over the hole not only causes the contamination problem but also causes the user to have a bad visible impression. Furthermore, since the reaction chamber communicates with the outside space directly via the hole, which may make the reaction chamber space unable to have a fixed volume and may cause a dynamic turbulence flow. Such structure may influence the detecting accuracy of the electrical sensing strip.

In practical application, some electrical sensing strips adopt the design that the cover layer is made of transparent material instead, such as the window designs mentioned in U.S. patent No. 6541216 and U.S. patent No. 8409412. However, the aforesaid transparent cover layer could make the user have a bad visible impression since the user could directly see the color of the analyte solution (e.g. blood or urine) in the reaction chamber. Furthermore, the dried biocatalyst reagent layer in the reaction chamber is an active material, so that the biocatalyst reagent layer could react with the analyte solution to generate a corresponding detection result after the analyte solution enters the reaction chamber. However, since the biocatalyst reagent layer has high activity, the detection result could be influenced easily if the biocatalyst reagent layer is excited by external energy (e.g. light) and has been reacted by the external energy before performing a test. Taking the electrical sensing strip for example, since the area nearby the electrodes is the main part to participate in the reaction, the importance to protect the activity of the biocatalyst reagent layer nearby the electrodes is more important than other parts. As light is a kind of energy, the biocatalyst reagent layer can be excited by external light. Such light energy, especially short wavelength lights (e.g. ultraviolet light), may cause the reagent inactivation when the biocatalyst reagent layer nearby the electrodes is exposed to the light through the transparent cover layer.

For solving the aforesaid reagent inactivation problem, the electrical sensing strip could adopt the design that the cover layer is made of opaque material to block the external light from being incident into the biocatalyst reagent layer. However, in the aforesaid design, whether the analyte solution entering the reaction chamber is sufficient, whether the analyte solution completely fills the reaction chamber, and whether the electrical sensing strip has been used are invisible to the naked eyes. Thus, the electrical sensing strip needs to utilize an additional electrical sensing circuit for detecting the aforesaid conditions, such that this design may prolong the detecting process and the aforesaid additional electrical sensing circuit also increases the complexity and the power consumption of the electrical sensing strip.

Documents US 2009/0188791 and WO 03/091717 both describe test strips comprising a sample chamber having an air venting channel.

### Summary of the Invention

This in mind, the present invention aims at providing a test strip utilizing a channel formed cooperatively by a spacer layer, a channel portion of a cover layer, and a support layer to exhaust air staying in a reaction chamber for efficiently solving the prior art problem that dust (or moisture) enters the reaction chamber via the hole (or the slit), and aims at providing a test strip according to claim 1. The dependent claims pertain to corresponding further developments and improvements.

As will be seen more clearly from the detailed description following below, the claimed test strip includes a spacer layer, a substrate, a reagent layer, a cover layer, and a support layer. The spacer layer has a notch. The substrate is attached under the spacer layer. The substrate has a reaction region exposed from the notch. The reagent layer is coated on the reaction region. The cover layer has a covering portion and a channel portion. The covering portion covers the notch. The channel portion extends rearward from the covering portion corresponding to a rear end of the notch. The support layer is attached on the spacer layer and located at two sides of the notch. The support layer is connected to the cover layer and the spacer layer to make the channel portion away from the spacer layer at a vertical distance for forming a reaction chamber cooperatively with the covering portion, the notch, and the substrate. The reaction chamber allows an analyte solution to enter and then react with the reagent layer. The support layer is further used for forming a channel cooperatively with the channel portion and the spacer layer. The channel allows exhausting air in the reaction chamber. At least one portion on a surface of at least one of the channel portion and the spacer layer corresponding to the channel has hydrophobicity.

### Brief Description of the Drawings

In the following, the invention is further illustrated by way of example, taking reference to the accompanying drawings thereof:
FIG. 1 is a diagram of a test strip according to an embodiment of the present invention,
FIG. 2 is an exploded diagram of the test strip in FIG. 1,
FIG. 3 is a sectional diagram of the test strip in FIG. 1 along a sectional line A-A,
FIG. 4 is a diagram of a channel portion having a hydrophobic layer partially coated thereon according to another embodiment of the present invention,

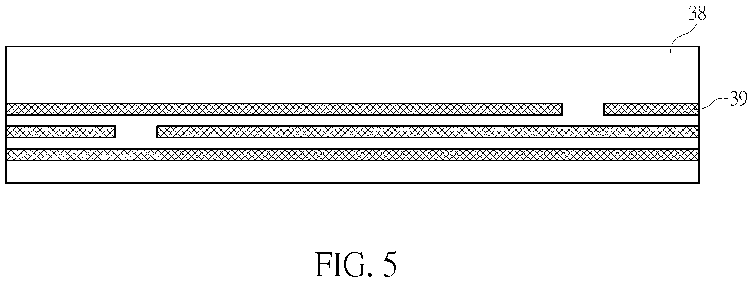

FIG. 5 is a diagram of a channel portion having a hydrophobic layer partially coated thereon according to another embodiment,

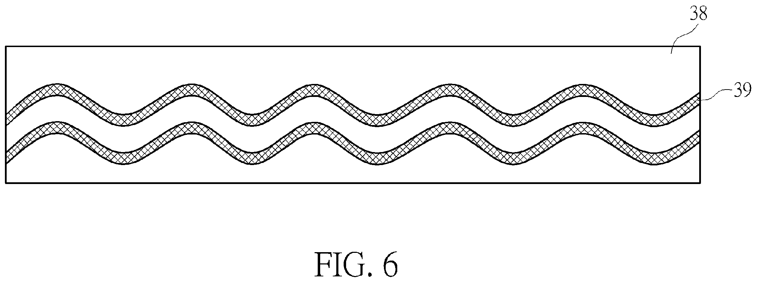

FIG. 6 is a diagram of a channel portion having a hydrophobic layer partially coated thereon according to another embodiment,
FIG. 7 is a partial top view of the test strip in FIG. 1 (not according to the invention), and
FIG. 8 is a partial top view of a test strip not according to the present invention.

### Detailed Description

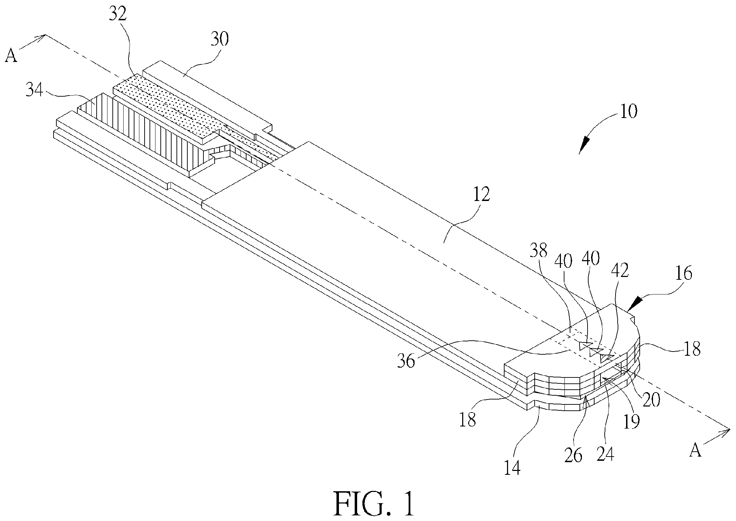

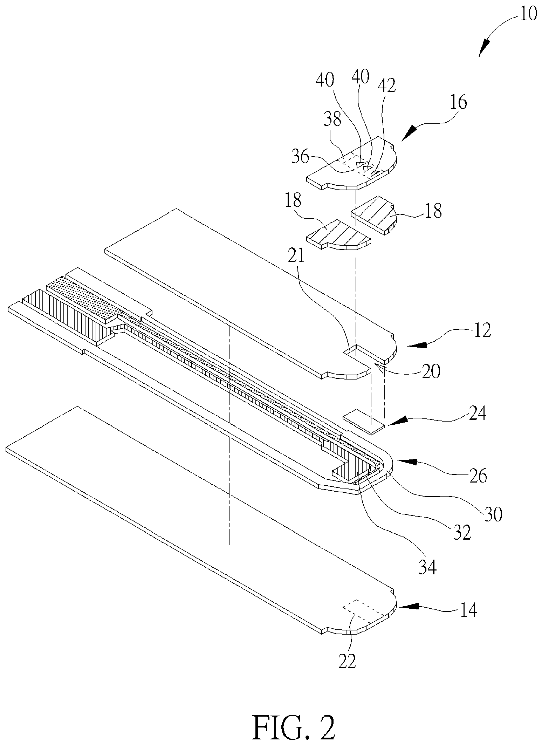

Please refer to FIG. 1 and FIG. 2. FIG. 1 is a diagram of a test strip 10 according to an embodiment of the present invention. FIG. 2 is an exploded diagram of the test strip 10 in FIG. 1. The test strip 10 could be applied to test of blood glucose, cholesterol, physiological conditions or other medicines. As shown in FIG. 1 and FIG. 2, the test strip 10 includes a spacer layer 12, a substrate 14, a cover layer 16, a support layer 18, a reagent layer 24, and an electrode layer 26. The spacer layer 12 has a notch 20. The spacer layer 12 and the cover layer 16 could be preferably made of plastic material (e.g. polyethylene terephthalate (PET) or polyethylene naphthalate (PEN)). The substrate 14 could be made of insulation material (e.g. polyethylene terephthalate). The spacer layer 12 is attached on the substrate 14 and has a reaction region 22 exposed from the notch 20, meaning that the reaction region 22 is defined by the notch 20. The reagent layer 24 is coated on the reaction region 22 by a conventional coating process, such as a drop casting process or a screen printing process. The electrode layer 26 is disposed between the substrate 14 and the spacer layer 12 and contacts the reagent layer 24 for detecting an electrical reaction of an analyte solution, such as detecting a concentration of the analyte solution. The reagent composition (e.g. biocatalyst (e.g. glucose oxidase or glucose dehydrogenase), the electron transfer mediator, the stabilizer and the adhesive) in the reagent layer 24 could vary with the type of an analyte solution to be tested. In this embodiment, the reagent layer 24 could be used for detecting concentration of glucose in blood (i.e. the analyte solution). Accordingly, when the analyte solution reacts with the reagent layer 24, the reagent layer 24 could be dissolved and then the electron could be transferred to the electrode layer 26 to produce an electrical reaction for generating a corresponding detection result.

In this embodiment, as shown in FIG. 2, the electrode layer 26 includes at least one working electrode 30 (one shown in FIG. 2, but not limited thereto), a reference electrode 32, and an auxiliary electrode 34 (but not limited thereto, meaning that the electrode layer 26 could adopt the design that the reference electrode 32 is omitted). The working electrode 30, the reference electrode 32, and the auxiliary electrode 34 could be formed on the substrate 14 by laser or could be printed on the substrate 14 by a screen printing process for forming the electrode layer 26. The working electrode 30 could be used for detecting a current electrical response generated by an analyte solution reacting with the reagent layer 24 to detect a concentration of an analyte solution. The reference electrode 32 is used for receiving a reference voltage when the analyte solution reacts with the reagent layer 24. The auxiliary electrode 34 is used for receiving a floating voltage to satisfy a voltage generated by the working electrode 30 when the analyte solution reacts with the reagent layer 24. Accordingly, the test strip 10 could detect an initial concentration of the analyte solution according to the current electrical response detected by the working electrode 30. As for the detailed description for the electrode design and the derived embodiments (e.g. the electrode layer 26 could only have the working electrode 30 and the auxiliary electrode 34 formed thereon) of the electrode layer 26, it is commonly seen in the prior art and omitted herein.

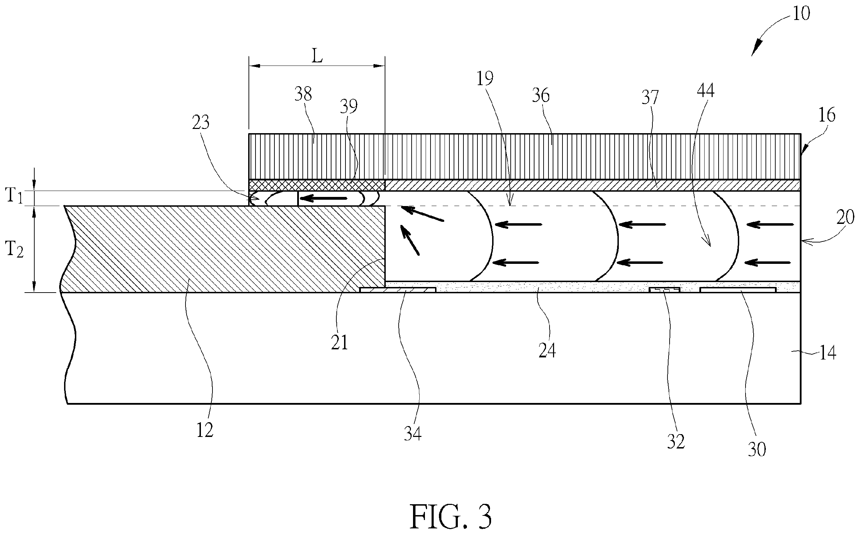

Furthermore, please refer to FIG. 3, which is a sectional diagram of the test strip 10 in FIG. 1 along a sectional line A-A. As shown in FIG. 1, FIG. 2, and FIG. 3, the cover layer 16 has a covering portion 36 and a channel portion 38. The covering portion 36 covers the notch 20, and the channel portion 38 extends rearward from the covering portion 36 corresponding to a rear end 21 of the notch 20. The support layer 18 could be made of plastic material (e.g. polyethylene terephthalate or polyethylene naphthalate) mixed with adhesive material (e.g. polymer of vinylacetate and acrylic ester), or be only made of adhesive material. The support layer 18 is located at two sides of the notch 20 to stick the cover layer 16 on the spacer layer 12, so as to make the channel portion 38 away from the spacer layer 12 at a vertical distance T₁. Accordingly, the support layer 18 could form a reaction chamber 19 cooperatively with the covering portion 36, the notch 20, and the substrate 14, which allows an analyte solution to enter and then to react with the reagent layer 24. To be more specific, a height of the reaction chamber 19 is equal to a sum of a thickness of the support layer 18 and a thickness of the spacer layer 12, a width of the reaction chamber 19 is equal to a width of the notch 20, and a depth of the reaction chamber 19 is equal to a depth of the notch 20. The support layer 18, the channel portion 38, and the spacer layer 12 could form a channel 23, an exhaust direction of which is substantially parallel to a travelling direction of the analyte solution, for exhausting air in the reaction chamber 19. The vertical distance T₁ (i.e. the thickness of the support layer 18) could be preferably between 10µm and 50µm, but not limited thereto. A thickness T₂ of the spacer layer 12 could be preferably between 50µm and 200µm, but not limited thereto. A length L of the channel 23 could be preferably larger than 200µm, but not limited thereto. In such a manner, via the structural design of the reaction chamber 19 and the structural design of the channel 23, reaction of the reagent layer 24 with the analyte solution could not be easily influenced by flowing of the analyte solution above the bottom of the reaction chamber 19 since the reagent layer 24 is located on the bottom of the reaction chamber 19 and is away from the channel 23 to make the analyte solution on the bottom of the reaction chamber 19 enter an immobilized state quickly, so as to reduce the detecting time of the test strip 10 and improve the detecting accuracy of the test strip 10. Furthermore, since the cross sectional area of the reaction chamber 19 is several times greater than the channel 23, the flowing amount per unit time of the analyte solution could be reduced quite substantially when the analyte solution enters the channel 23 having a relatively smaller cross sectional area from the reaction chamber 19 having a relatively larger cross sectional area. Moreover, the flowing speed of the analyte solution could also be reduced greatly as the contact resistance between the analyte solution and the wall of the channel 23 increases, so as to immobilize the analyte solution for efficiently preventing the analyte solution from flowing over the channel 23.

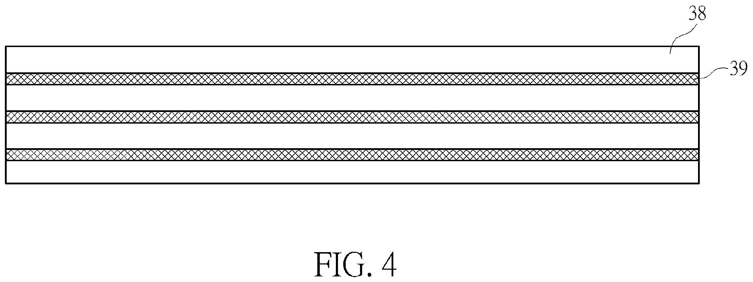

To be noted, in this embodiment, as shown in FIG. 3, a surface of the covering portion 36 corresponding to the reaction chamber 19 has at least one front end portion (close to an opening side of the reaction chamber 19) with a hydrophilic layer 37 coated thereon, or the hydrophilic layer 37 is coated over the surface of the covering portion 36 corresponding to the reaction chamber 19. At least one portion of a surface of the channel portion 38 corresponding to the channel 23 has a hydrophobic layer 39 coated thereon. For example, the hydrophobic layer 39 could be coated on the entire surface of the channel portion 38 as shown in FIG. 3, or could be coated alternately on the surface of the channel portion 38 in a continuous strip shape as shown in FIG. 4. The contacting length of the hydrophobic layer 39 for the analyte solution depends on hydrophobicity of the hydrophobic layer 39 and viscosity of the analyte solution, and could be preferably between 200µm and 1000µm. In another embodiment, the hydrophilic layer 37 could also be coated over the bottom surface of the cover layer 16, and the hydrophobic layer 39 is coated on the surface of the channel portion 38. Moreover, in another embodiment, only the hydrophilic layer 37 needs to be coated on the covering portion 36 as the bottom surface of the cover layer 16 has hydrophobicity itself. That is to say, the present invention adopts the aforesaid designs for achieving the purpose that the surface of the covering portion 36 close to the opening side of the reaction chamber 19 has hydrophilicity and the channel portion 38 has hydrophobicity. As for whether the hydrophilic layer 37 and the hydrophobic layer 39 need to be coated on the cover layer 16 or not, it depends on the material of the cover layer 16.

In such a manner, via the coating design that the covering portion 36 has the hydrophilic layer 37 coated thereon and the channel portion 38 has the hydrophobic layer 39 coated thereon, the analyte solution could be absorbed by hydrophilicity of the hydrophilic layer 37 so as to enter and then fill the reaction chamber 19. Subsequently, the analyte solution could be repulsed by hydrophobicity of the hydrophobic layer 39 to be immobilized after the analyte solution contacts the hydrophobic layer 39 on the channel portion 38. On the other hand, if the excessive amount of the analyte solution enters the reaction chamber 19, the analyte solution would continue flowing along the channel 23. During the analyte solution flows from the reaction chamber 19 through the channel 23, as shown in FIG. 3, the hydrophobicity of the hydrophobic layer 39 could transform the shape of flowing of the analyte solution from concave in the reaction chamber 19 to convex in the channel 23, so as to make the analyte solution immobilized for efficiently preventing the analyte solution from flowing over the channel 23. In practical application, coating of the hydrophobic layer 39 is not limited to the aforesaid embodiment, meaning that the hydrophobic layer 39 could be selectively coated on at least one of the channel portion 38 of the cover layer 16 and the spacer layer 12. For example, the hydrophobic layer 39 could be coated on the entire surface of the spacer layer 12 or could be coated alternately on the surface of the spacer layer 12 in a continuous strip shape (but not limited thereto, meaning that the hydrophobic layer 39 could also be coated on the surface of the spacer layer 12 in a discontinuous strip shape or in a wave shape). As for which coating design is utilized, it depends on the practical application of the test strip 10.

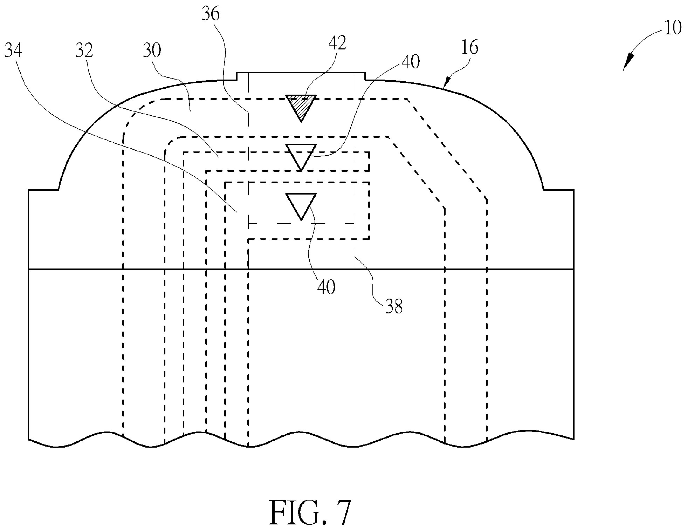

The hydrophobic layer 39 may also have its translucent/opaque characteristics and therefore it can also be used for covering the electrode portion of the covering portion 36 within one painting procedure to prevent light from being incident into the working electrode 30 via a transparent cover layer 16 as shown in FIG. 7, and then the hydrophilic layer 37 could be coated on the covering portion 36.

Furthermore, please refer to FIG. 7 (not according to the invention), which is a partial top view of the test strip 10 in FIG. 1. As shown in FIG. 7, the covering portion 36 could have at least one transparent window 40 for a user to see the analyte solution. The transparent window 40 could be formed on the covering portion 36 not corresponding to the working electrode 30. For example, the transparent window 40 could be aligned with a reference electrode 32 or be aligned with a gap between the reference electrode 32 and the auxiliary electrode 34. In this embodiment, the transparent window 40 could be in a triangle shape (but not limited thereto, meaning that the transparent window 40 could be in a rectangle shape, a trapezoid shape, a polygon shape, an arrow shape, or a circular shape), and could be aligned with the reference electrode 32 and the auxiliary electrode 34 respectively. In practical application, the covering portion 36 could further have an opaque mark 42 aligned with the working electrode 30. The transparent window 40 and the opaque mark 42 could be formed on the covering portion 36 by a conventional pattern forming process. For example, opaque paint could be first printed on the cover layer 16 made of transparent material and then a transparent pattern could be formed on the cover layer 16 to form the transparent window 40. Via the design that the transparent window 40 is formed on the cover layer 16 not corresponding to the working electrode 30, the test strip 10 not only allows the user to know the filling condition of the analyte solution and whether the test strip 10 has been used or not, but also prevents light from being incident into the working electrode 30 through the transparent window 40 so as to efficiently solve the reagent inactivation problem of the reagent layer when the reagent layer is excited by the external light and has been reacted by the external light before performing a test. Accordingly, the detecting accuracy of the test strip 10 could be improved. To be noted, where the transparent window 40 and the opaque mark 42 are formed is not limited to the aforesaid embodiment. For example, in another embodiment, the transparent window 40 could be only aligned with the auxiliary electrode 34 and the opaque marks 42 could be aligned with the working electrode 30 and the reference electrode 32 respectively. As for which design is utilized, it depends on the practical application of the test strip 10.

Via the aforesaid design, as shown in FIG. 3, when an analyte solution 44 is absorbed into the reaction chamber 19 quickly via the capillary phenomenon and the hydrophilicity of the hydrophilic layer 37, air originally staying in the reaction chamber 19 could be exhausted rearward via the channel 23 to ensure that the analyte solution 44 could enter the reaction chamber 19 smoothly. Accordingly, the present invention could solve the prior art problem that the analyte solution stops flowing inwardly due to air staying in the reaction chamber 19, so as to improve the detecting accuracy of the test strip 10. Furthermore, compared with the prior art adopting the upward (or downward) exhausting design that a hole (or a slit) is formed on a cover layer or a substrate, the present invention adopts the design that air originally staying in the reaction chamber could be exhausted rearward through the channel cooperatively formed by the spacer layer, the channel portion of the cover layer and the support layer, to efficiently solve the prior art problem that dust (or moisture) enters the reaction chamber via the hole (or the slit) easily.

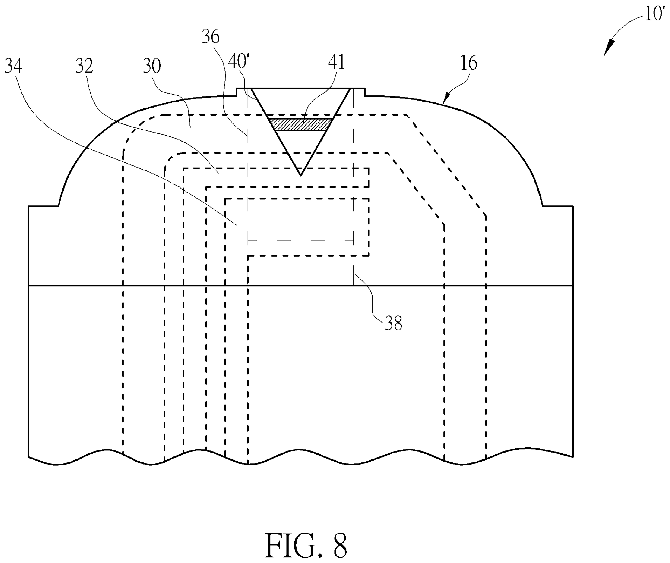

It should be mentioned that the design of the transparent window is not limited to the aforesaid embodiment. Please refer to FIG. 8, which is a partial top view of a test strip 10' according to another embodiment of the present invention. Components both mentioned in FIG. 8 and the aforesaid embodiments represent components with similar functions or structures, and the related description is omitted herein. As shown in FIG. 8, the covering portion 36 of the cover layer 16 of the test strip 10' has a transparent window 40'. The transparent window 40' extends rearward from the front end of the cover layer 16 corresponding to an opening side of the reaction chamber 19 to cross the working electrode 30 and has a covering pattern 41. The covering pattern 41 is transversely disposed in the transparent window 40' for partially covering the working electrode 30. The covering pattern 41 could be a straight line pattern as shown in FIG. 8, but not limited thereto, meaning that the covering pattern 41 could also be other pattern (e.g. an arc-shaped pattern or a wave-shaped pattern) for partially covering the working electrode 30. Accordingly, the test strip 10' not only allows the user to know the filling condition of the analyte solution and whether the test strip 10' has been used or not via the transparent window 40', but also properly reduces influence of light incident into the test strip 10' via the transparent window 40' since the covering pattern 41 could partially cover the working electrode 30, so as to improve the aforesaid reagent inactivation problem of the reagent layer for increasing the detecting accuracy of the test strip 10'.

Furthermore, the test strip could only adopt the design that air originally staying in the reaction chamber could be exhausted rearward through the channel formed by the support layer, the channel portion of the cover layer and the spacer layer, or could only adopt the design that the transparent window is not aligned with the working electrode or the transparent window has the covering pattern partially covering the working electrode, so as to simplify the structural design of the test strip and improve flexibility of the structural design of the test strip. For example, in another embodiment, the test strip could only adopt the design that the transparent window is not aligned with the working electrode, and could selectively adopt a conventional exhausting design, such as the upward (or downward) exhausting design that a hole (or a slit) is formed on the cover layer or the substrate. In another embodiment, the present invention could only adopt the design that air originally staying in the reaction chamber could be exhausted rearward through the channel formed by the support layer, the channel portion of the cover layer and the spacer layer, and could utilize other detecting method (e.g. a colorimetry method) to detect the analyte solution. As for the related description for other derived embodiments, it could be reasoned by analogy according to the aforesaid embodiments and omitted herein.

In summary, compared with the prior art adopting the upward (or downward) exhausting design that a hole (or a slit) is formed on the cover layer or the substrate, the present invention adopts the design that air originally staying in the reaction chamber could be exhausted rearward through the channel formed by the support layer, the channel portion of the cover layer, and the spacer layer, so as to efficiently solve the prior art problem that dust (or moisture) enters the reaction chamber via the hole (or the slit). Furthermore, via the design that the transparent window is not aligned with the working electrode (not according to the invention), the test strip not only allows the user to directly know the filling condition of the analyte solution and whether the test strip has been used or not, but also prevents light from being incident into the working electrode through the transparent window so as to efficiently solve the reagent inactivation problem of the reagent layer. Moreover, since the test strip of the present invention does not need to utilize additional electrodes to detect the filling condition of the analyte solution and whether the test strip has been used or not, the present invention could also solve the prior art problem that the additional electrical sensing circuit design prolongs the detecting process and increases the complexity and the power consumption of the electrical sensing strip.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A test strip (10, 10') comprising
a spacer layer (12) having a notch (20);
a substrate (14) attached under the spacer layer (12), the substrate (14) having a reaction region (22) exposed from the notch (20);
a reagent layer (24) coated on the reaction region (22);
a cover layer (16) having a covering portion (36) and a channel portion (38), the covering portion (36) covering the notch (20), the channel portion (38) extending rearward from the covering portion (36) corresponding to a rear end (21) of the notch (20); and
a support layer (18) attached on the spacer layer (12) and located at two sides of the notch (20), the support layer (18) being connected to the cover layer (16) and the spacer layer (12) to make the channel portion (38) away from the spacer layer (12) at a vertical distance for forming a reaction chamber (19) cooperatively with the covering portion (36), the notch (20), and the substrate (14), the reaction chamber (19) allowing an analyte solution (44) to enter and then react with the reagent layer (24), the support layer (18) being further used for forming a channel (23) cooperatively with the channel portion (38) and the spacer layer (12), the channel (23) allowing exhausting air in the reaction chamber (19), and at least one portion on a surface of at least one of the channel portion (38) and the spacer layer (12) corresponding to the channel (23) having hydrophobicity, a thickness of the support layer (18) being between 10pm and 50µm, the support layer (18) being made of adhesive material to stick the cover layer (16) on the spacer layer (12), hydrophobicity of the at least one portion on the surface of the at least one of the channel portion (38) and the spacer layer (12) corresponding to the channel (23) being coated with a hydrophobic layer (39) in a continuous strip shape, a contacting length of the hydrophobic layer 39 for the analyte solution (44) being between 200µm and 1000µm.

2. The test strip (10, 10') of claim 1, **characterized in that** at least one front end portion on a surface of the covering portion (36) corresponding to the reaction chamber (19) has hydrophilicity.

3. The test strip (10, 10') of claim 2, **characterized in that** the hydrophilicity of the at least one front end portion on the surface of the covering portion (36) corresponding to the reaction chamber (19) is a coating of a hydrophilic layer (37).

4. The test strip (10, 10') of claim 1, **characterized in that** the hydrophobic layer (39) is made of translucent paint material.

5. The test strip (10, 10') of claim 1, **characterized in that** the spacer layer (12), the substrate (14), and the cover layer (16) are made of insulation material, and the test strip (10, 10') further comprises:
an electrode layer (26) disposed between the substrate (14) and the spacer layer (12), the electrode layer (26) contacting the reagent layer (24) for detecting an electric reaction of the analyte solution (44) reacting with the reagent layer (24), the electrode layer (26) comprising a working electrode (30) and an auxiliary electrode (34), the working electrode (30) being configured for detecting a current electrical response when the analyte solution (44) reacts with the reagent layer (24) to detect the electrical reaction of the analyte solution (44), and the auxiliary electrode (34) being configured for receiving a floating voltage to satisfy a voltage generated by the working electrode (30) when the analyte solution (44) reacts with the reagent layer (24).

6. The test strip (10, 10') of claim 5, **characterized in that** at least one transparent window (40, 40') is formed on the covering portion (36) not corresponding to the working electrode (30), or extends rearward from a front end of the cover layer (16) corresponding to an opening side of the reaction chamber (19) to cross the working electrode (30) and has a covering pattern (41) to partially cover the working electrode (30).

7. The test strip (10) of claim 6, **characterized in that** the at least one transparent window (40) is aligned with the auxiliary electrode (34) or is not aligned with the working electrode (30) and the auxiliary electrode (34).

8. The test strip (10) of claim 7, **characterized in that** at least one opaque mark (42) is formed on the covering portion (36) and is aligned with the working electrode (30).

9. The test strip (10, 10') of claim 1, **characterized in that** a thickness of the spacer layer (12) is between 50µm and 200µm and a length of the channel (23) is larger than 200µm.

## Patentansprüche

1. Teststreifen (10, 10') welcher umfasst:
eine Distanzschicht (12), die eine Aussparung (20) aufweist;
ein Substrat (14), das unter der Distanzschicht (12) angebracht ist, worin das Substrat (14) einen durch die Aussparung (20) freiliegenden Reaktionsbereich (22) aufweist;
eine Reagenzschicht (24), die auf dem Reaktionsbereich (22) aufgebracht ist;
eine Deckschicht (16), die einen Deckbereich (36) und einen Kanalbereich (38) aufweist, worin der Deckbereich (36) die Aussparung (20) bedeckt, worin sich der Kanalbereich (38) von dem Deckbereich (36), der mit einem hinteren Ende (21) der Aussparung (20) in Verbindung steht, nach hinten erstreckt; und
eine Stützungsschicht (18), die auf der Distanzschicht (12) und auf zwei Seiten der Aussparung (20) angebracht ist, worin die Stützschicht (18) mit der Deckschicht (16) und der Distanzschicht (12) verbunden ist, um den Kanalbereich (38) von der Distanzschicht (12) in einer vertikalen Entfernung zu separieren, um eine Reaktionskammer (19) zusammen mit dem Deckbereich (36), der Aussparung (20), und dem Substrat (14) auszubilden, worin die Reaktionskammer (19) ein Einströmen einer Analyt-Lösung (44) und eine anschließende Reaktion mit der Reagenzschicht (24) ermöglicht, worin die Stützschicht (18) weiter verwendet wird, einen Kanal (23) zusammen mit dem Kanalbereich (38) und der Distanzschicht (12) auszubilden, worin der Kanal (23) ausströmender Luft einen Eintritt in die Reaktionskammer (19) ermöglicht, und worin mindestens ein Bereich auf einer Oberfläche von mindestens dem Kanalbereich (38) und/oder der Distanzschicht (12) entsprechend dem Kanal (23) Hydrophobizität aufweist, worin eine Dicke der Stützschicht (18) zwischen 10 µm und 50 µm ist, worin die Stützschicht (18) aus haftendem Material hergestellt ist, um die Deckschicht (16) an die Distanzschicht (12) zu kleben, worin die Hydrophobizität von mindestens einem Bereich auf der Oberfläche von mindestens dem Kanalbereich (38) und/oder der Distanzschicht (12) entsprechend dem Kanal (23) mit einer hydrophoben Schicht (39) in einer kontinuierlichen Streifenform beschichtet ist, worin eine Kontaktlänge der hydrophoben Schicht (39) für die Analyt-Lösung (44) zwischen 200 µm und 1000 µm beträgt.

2. Teststreifen (10, 10') nach Anspruch 1, **dadurch gekennzeichnet, dass** mindestens ein vorderer Endbereich auf der Oberfläche des Deckbereichs (36), der mit Reaktionskammer (19) in Verbindung steht, hydrophil.

3. Teststreifen (10, 10') nach Anspruch 2, **dadurch gekennzeichnet, dass** die hydrophile Eigenschaft des mindestens einen vorderen Endbereichs auf der Oberfläche des Deckbereichs (36) entsprechend der Reaktionskammer (19), eine Beschichtung mit hydrophilen Schicht (37) ist.

4. Teststreifen (10, 10') nach Anspruch 1, **dadurch gekennzeichnet, dass** die hydrophobe Schicht (39) aus durchsichtigem Farbmaterial hergestellt ist.

5. Teststreifen (10, 10') nach Anspruch 1, **dadurch gekennzeichnet, dass** die Distanzschicht (12), das Substrat (14), und die Deckschicht (16) aus isolierendem Material hergestellt ist, und worin der Teststreifen (10, 10') weiter umfasst:
eine Elektrodenschicht (26), die zwischen dem Substrat (14) und der Distanzschicht (12) angeordnet ist, worin die Elektrodenschicht (26) zum Erfassen einer elektrischen Reaktion der mit der Reagenzschicht (24) reagierenden Analyt-Lösung (44) mit der Reagenzschicht (24) in Kontakt steht, worin die Elektrodenschicht (26) eine Arbeitselektrode (30) und eine Hilfselektrode (34) umfasst, worin die Arbeitselektrode (30) ausgestaltet ist, eine aktuelle elektrische Antwort zu erfassen, wenn die Analyt-Lösung (44) mit der Reagenzschicht (24) reagiert, um die elektrische Reaktion der Analyt-Lösung (44) zu erfassen, und worin die Hilfselektrode (34) ausgestaltet ist, eine Schwebespannung zu empfangen, um einer durch die Arbeitselektrode (30) erzeugten Spannung zu entsprechen, wenn die Analyt-Lösung (44) mit der Reagenzschicht (24) reagiert.

6. Teststreifen (10, 10') nach Anspruch 5, **dadurch gekennzeichnet, dass** mindestens ein durchsichtiges Fenster (40, 40') auf dem Deckbereich (36) ausgebildet ist, der nicht der Arbeitselektrode (30) entspricht, oder sich von einem vorderen Ende der Deckschicht (16) entsprechend einer offenen Seite der Reaktionskammer (19) nach hinten erstreckt, um mit der Arbeitselektrode (30) zu überlappen und ein Deckmuster (41) aufweist, um die Arbeitselektrode (30) teilweise zu bedecken.

7. Teststreifen (10) nach Anspruch 6, **dadurch gekennzeichnet, dass** das mindestens eine durchsichtige Fenster (40) mit der Hilfselektrode (34) ausgerichtet ist oder nicht mit der Arbeitselektrode (30) und der Hilfselektrode (34) ausgerichtet ist.

8. Teststreifen (10) nach Anspruch 7, **dadurch gekennzeichnet, dass** mindestens eine undurchsichtige Markierung (42) auf dem Deckbereich (36) ausgebildet und mit der Arbeitselektrode (30) ausgerichtet ist.

9. Teststreifen (10, 10') nach Anspruch 1, **dadurch gekennzeichnet, dass** eine Dicke der Distanzschicht (12) zwischen 50 µm und 200 µm beträgt und eine Länge des Kanals (23) größer als 200 µm ist.

## Revendications

1. Bande d'essai (10, 10') comprenant
une couche d'espacement (12) ayant une encoche (20) ;
un substrat (14) fixé sous la couche d'espacement (12), le substrat (14) ayant une région de réaction (22) exposée à partir de l'encoche (20) ;
une couche de réactif (24) appliquée en revêtement sur la région de réaction (22) ;
une couche de recouvrement (16) ayant une partie de recouvrement (36) et une partie de canal (38),
la partie de recouvrement (36) recouvrant l'encoche (20), la partie de canal (38) s'étendant vers l'arrière à partir de la partie de recouvrement (36) correspondant à une extrémité arrière (21) de l'encoche (20) ; et
une couche de support (18) fixée sur la couche d'espacement (12) et située sur deux côtés de l'encoche (20), la couche de support (18) étant reliée à la couche de recouvrement (16) et à la couche d'espacement (12) pour éloigner la partie de canal (38) de la couche d'espacement (12) selon une distance verticale pour former une chambre de réaction (19) en coopération avec la partie de recouvrement (36), l'encoche (20), et le substrat (14), la chambre de réaction (19) permettant à une solution d'analyte (44) d'entrer puis de réagir avec la couche de réactif (24), la couche de support (18) étant en outre utilisée pour former un canal (23) en coopération avec la partie de canal (38) et la couche d'espacement (12), le canal (23) permettant l'échappement d'air dans la chambre de réaction (19), et au moins une partie sur une surface d'au moins l'une parmi la partie de canal (38) et la couche d'espacement (12) correspondant au canal (23) ayant une hydrophobicité, une épaisseur de la couche de support (18) étant comprise entre 10 µm et 50 µm, la couche de support (18) étant constituée d'un matériau adhésif pour coller la couche de recouvrement (16) sur la couche d'espacement (12), l'hydrophobicité de l'au moins une partie sur la surface de l'au moins une parmi la partie de canal (38) et la couche d'espacement (12) correspondant au canal (23) étant revêtue d'une couche hydrophobe (39) en forme de bande continue, une longueur de contact de la couche hydrophobe 39 pour la solution d'analyte (44) étant comprise entre 200 µm et 1 000 µm.

2. Bande d'essai (10, 10') selon la revendication 1, **caractérisée en ce qu'**au moins une partie d'extrémité avant sur une surface de la partie de recouvrement (36) correspondant à la chambre de réaction (19) a un caractère hydrophile.

3. Bande d'essai (10, 10') selon la revendication 2, **caractérisée en ce que** le caractère hydrophile de l'au moins une partie d'extrémité avant sur la surface de la partie de recouvrement (36) correspondant à la chambre de réaction (19) est un revêtement d'une couche hydrophile (37).

4. Bande d'essai (10, 10') selon la revendication 1, **caractérisée en ce que** la couche hydrophobe (39) est constituée d'un matériau de peinture translucide.

5. Bande d'essai (10, 10') selon la revendication 1, **caractérisée en ce que** la couche d'espacement (12), le substrat (14), et la couche de recouvrement (16) sont constitués d'un matériau isolant, et la bande d'essai (10, 10') comprenant en outre :
une couche d'électrode (26) disposée entre le substrat (14) et la couche d'espacement (12), la couche d'électrode (26) étant en contact avec la couche de réactif (24) pour détecter une réaction électrique de la solution d'analyte (44) réagissant avec la couche de réactif (24), la couche d'électrode (26) comprenant une électrode de travail (30) et une électrode auxiliaire (34), l'électrode de travail (30) étant configurée pour détecter une réponse électrique de courant lorsque la solution d'analyte (44) réagit avec la couche de réactif (24) pour détecter la réaction électrique de la solution d'analyte (44), et l'électrode auxiliaire (34) étant configurée pour recevoir une tension flottante pour satisfaire une tension générée par l'électrode de travail (30) lorsque la solution d'analyte (44) réagit avec la couche de réactif (24).

6. Bande d'essai (10, 10') selon la revendication 5, **caractérisée en ce qu'**au moins une fenêtre transparente (40, 40') est formée sur la partie de recouvrement (36) qui ne correspond pas à l'électrode de travail (30), ou s'étend vers l'arrière à partir d'une extrémité avant de la couche de recouvrement (16) correspondant à un côté d'ouverture de la chambre de réaction (19) pour traverser l'électrode de travail (30) et a un motif de recouvrement (41) pour recouvrir partiellement l'électrode de travail (30).

7. Bande d'essai (10) selon la revendication 6, **caractérisée en ce que** l'au moins une fenêtre transparente (40) est alignée avec l'électrode auxiliaire (34) ou n'est pas alignée avec l'électrode de travail (30) et l'électrode auxiliaire (34).

8. Bande d'essai (10) selon la revendication 7, **caractérisée en ce qu'**au moins une marque opaque (42) est formée sur la partie de recouvrement (36) et est alignée avec l'électrode de travail (30).

9. Bande d'essai (10, 10') selon la revendication 1, **caractérisée en ce qu'**une épaisseur de la couche d'espacement (12) est comprise entre 50 µm et 200 µm et une longueur du canal (23) est supérieure à 200 µm.
